# EUROPEAN PATENT SPECIFICATION

(11) **EP 1 872 645 B1**
(45) Date of publication and mention of the grant of the patent: **01.07.2009**
(21) Application number: 07110503.5
(22) Date of filing: 19.06.2007
(51) Int. Cl.: A01D 41/14

(54) **Locking harvester header lift cylinder**
Hebezylinder zur Verriegelung eines Erntevorsatzgerätes einer Erntemaschine
Verrouillage de vérin de levage à tête d'abattage-ébranchage

(30) Priority: 26.06.2006 US 474702
(43) Date of publication of application: 02.01.2008
(73) Proprietor: Deere & Company, Moline, IL 61265-8098 (US)
(72) Inventor: Coers, Bruce A, Hillsdale, IA 61257 (US); Marvin, Paul D, DeWitt, IA 52742 (US); Becker, Klaus E, East Moline, IL 61244 (US); Burke, Daniel J, Cordova, IL 61242 (US); Sandau, Jerry A, Orion, IL 61273 (US); Pfeiffer, Dohn W, Davenport, IA 52807 (US)
(74) Representative: Holst, Sönke

(56) References cited:
- EP-A1- 1 606 988
- US-A- 3 604 186
- US-A- 5 906 089

## Description

The invention relates to an agricultural harvester according to the pre-amble of claim 1.

Headers on agricultural harvesters gather and cut the crops that are harvested. A typical header is an elongate laterally extending structure, typically 4.5-12 m wide, that is supported on a feeder house located on the front of the harvester vehicle. The header is vertically moveable using hydraulic cylinders that are coupled to the feeder house at their forward ends and to the chassis of the harvester vehicle at their rear ends. The operator selectively raises and lowers the feeder house and the header attached thereto by adjusting the length of the hydraulic cylinders.

In some prior art embodiments, the hydraulic cylinders are not double acting, they do not include hydraulic circuits to actively retract the cylinders and lower the header. Instead, they rely on the weight of the header to do that. They include hydraulic circuits that fill the head end of the cylinder to extend it. When hydraulic fluid is released from the head end of the cylinders, the weight of the header and feeder house are sufficient to retract the cylinders. Further prior art harvesting machines are described in US 6516595.

US 5 906 089 A describes a windrower with a header that includes a pair of double-acting cylinders defining the position of lower stops for the header. One cylinder is a master cylinder and has its rod end connected to the base end of the slave cylinder. The rod end of the slave cylinder is connected to a check valve that is closed during normal operation.

EP 1 606 988 A describes a combine with a feeder house that is pivotable around a horizontal, transverse axis by two hydraulic cylinders. The rod end ports of the cylinders are coupled to a tank.

US 3 604 186 A describes another combine harvester with a pivotally mounted feeder house. The lift cylinder is single acting and the base end is connected to a hydraulic valve closing the chamber unless the feeder house is lifted or lowered.

For improved efficiency, agricultural equipment manufacturers have been making headers longer and longer. Each increase in length correspondingly increases the mass of the header. The increased length also increases the torque applied to the feeder house when the ends of the (now longer) header strike the ground.

As a result of this, the feeder house is subject to higher torques about a longitudinal axis that may damage the feeder house. It is an object of this invention to reduce the possibility of this damage by providing an apparatus to resist the torques applied to the feeder house due to end loads applied to the header.

This object is achieved with the subject matter of claim 1. Advantageous embodiments are recited in the dependent claims.

In accordance with the invention, a feeder house lift cylinder system is provided comprising left and right feeder house lift cylinders coupled between the feeder house and the vehicle to lift and lower the feeder house with respect to the vehicle. A hydraulic circuit is coupled to the lift cylinders and configured to block fluid flow out of the rod ends of each of the cylinders during normal harvesting operation and/or transport thereby reducing twisting of the feeder house.

An embodiment of the invention is shown in the drawings, in which:
Figure 1 is a side view of an agricultural harvester showing a fragmentary left side feeder house hydraulic lift cylinder.
Figure 2 is a rear perspective view of the feeder house and feeder house lift cylinders of Figure 1 with the vehicle portion of the harvester removed for convenience of illustration.
Figure 3 is a schematic diagram of the hydraulic circuit coupled to the cylinders of Figures 1 and 2.

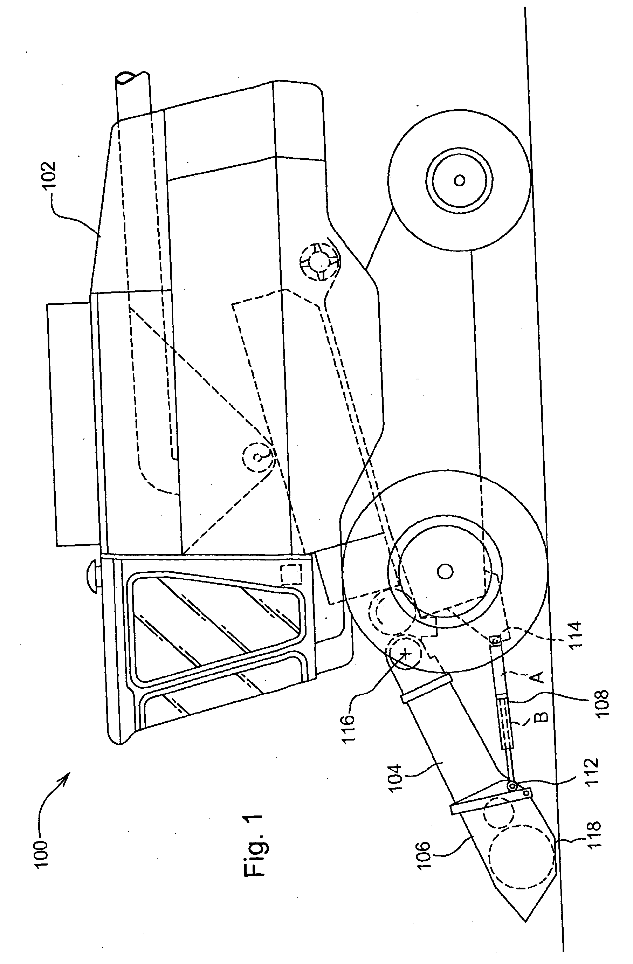

Referring now to Figure 1, an agricultural harvester 100 is shown, comprising a self propelled vehicle portion 102 to which a feeder house 104 is pivotally coupled. The feeder house 104 supports a header 106 which is configured to gather and cut the crop. The feeder house 104 receives material from the header 106 and conveys it to the vehicle portion 102 for threshing, separation, cleaning, and storage.

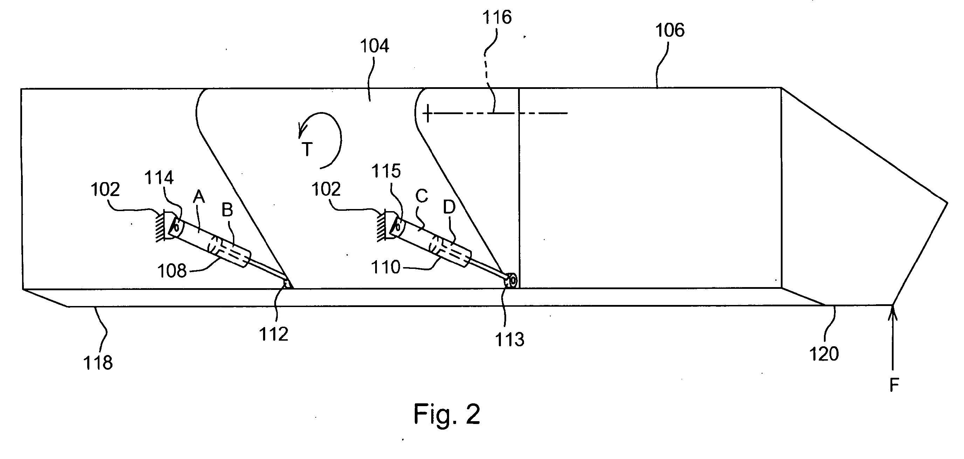

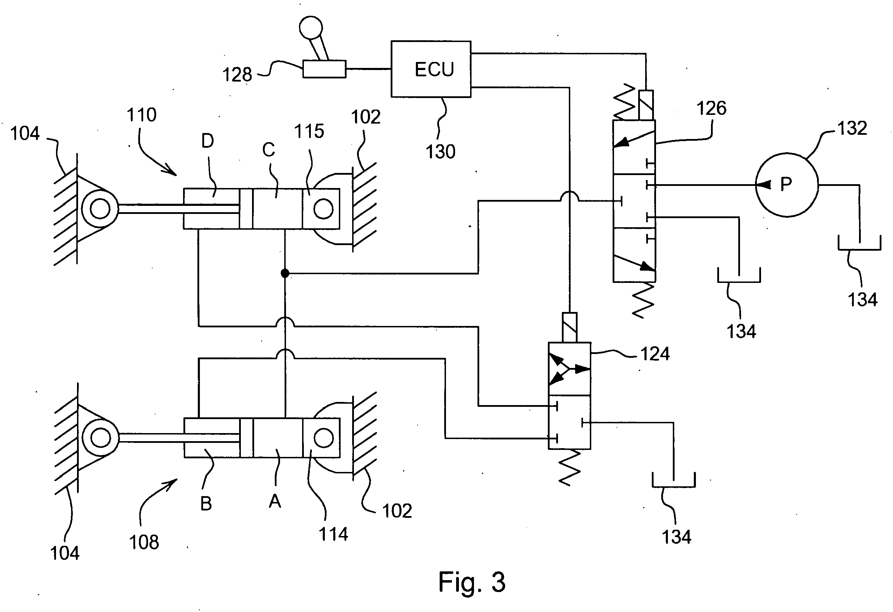

Two hydraulic lift cylinders 108, 110 (Figs. 2 and 3) are coupled to and between the feeder house 104 and the vehicle portion 102 to lift and lower the front end of the feeder house 104 with respect to the vehicle portion 102. This lifting and lowering raises and lowers the header 106 with respect to the vehicle portion 102 and the ground because the header 106 is supported on the front end of the feeder house 104.

The forward ends 112, 113 of the left lift cylinder 108 and right lift cylinder 110, respectively, (only cylinder 108 is shown in Figure 1) are pivotally coupled to a lower forward portion of the feeder house 104. The rear ends 114, 115, of the lift cylinders 108, 110, respectively, are pivotally coupled to the vehicle portion 102.

The feeder house itself is pivotally coupled to the vehicle portion to pivot up and down. It pivots about an axis 116 that extends laterally with respect to the vehicle and its direction of travel through the agricultural field.

The feeder house 104 is a rigid structure that holds the header in a horizontal orientation. It prevents the header 106 from twisting about a longitudinal axis and dipping the left and right ends of the header into the earth.

Referring now to Figure 2, the feeder house supports the header at the midpoint of the header 106, equidistant from the left end 118 and the right end 120 of the header 106. The two lift cylinders 108,110 are coupled to the feeder house 104 near the front bottom left and front bottom right corners of the feeder house 104. The cylinders themselves are oriented in parallel and are spaced apart from each other on opposite sides of the feeder house.

As headers are manufactured wider and wider, impacts at the corners of the headers (shown schematically as an upward force arrow "F" in Figure 2) apply greater torques "T" (Fig. 2) about a longitudinal axis to the front end of the feeder house. The rear of the feeder house is constrained to pivot about lateral axis 116. With the rear of the feeder house prevented from twisting about a longitudinal axis and the front of the feeder house twisted about a longitudinal axis, there is a greater risk of feeder house damage. Twisting caused by (for example) the force "F" will raise the right side of the feeder house, tending to extend right side cylinder 110, which would increase cylinder volume "C" of the head end of the cylinder and decrease volume "D" (Fig. 2) of the rod end of the cylinder. If the rod end of cylinder 110 was in free fluid communication with a hydraulic tank or reservoir (as prior art lift cylinders are), cylinder 110 would provide very limited resistance to this twisting. On the other hand, if fluid flow from the rod end of cylinder 110 is blocked, cylinder 110 will act like a rigid member and will help resist the upward movement of the right side of the feeder house and twisting of the feeder house. Similarly, if flow from the rod end of cylinder 108 is also blocked, cylinder 108 will also act like a rigid member and resist twisting of the feeder house in the opposite direction of torque "T" by ground impact forces applied to the left end of the header 106.

This blocking of fluid flow from the cylinders is provided by the present invention, and particularly by the hydraulic circuit illustrated in Figure 3. Referring now to Figure 3, left and right feeder house lift cylinders 108,110 are coupled to a hydraulic circuit 122 that raises and lowers the feeder house under operator command, and blocks flow from the cylinders 108,110 when the ends of the header impact the ground and tend to twist the feeder house.

In the preferred embodiment a first valve element 124 of circuit 122 opens to permit flow into and out of the rod ends of the cylinders whenever the operator commands a second valve element 126 to extend or retract the cylinders (i.e. to raise or lower the feeder house).

When the operator ceases commanding the cylinders to extend or retract, the first valve element blocks all flow of hydraulic fluid to and from the rod end of the cylinder. When fluid flow is prevented from exiting the cylinder both from the rod ends and the head ends, the cylinders function as a rigid member, and resist the twisting of the feeder house.

To raise the feeder house, the operator manipulates operator input device 128, which is coupled to electronic control unit (ECU) 130. ECU 130 responsively drives the first valve element 124 to move from its de-energized position (illustrated in Figure 3) in which flow to and from the rod ends of cylinders 108, 110 is blocked, to its second position in which flow is permitted. Valve element 126 sends hydraulic fluid under pressure from pump 132 to cylinders 108 to extend the cylinders. The force of gravity acting on the header and feeder house is employed to retract the cylinders. ECU 130 also drives the second valve element 126 to move from it de-energized position (illustrated in Figure 3) to either of its two other positions, depending upon the position to which the operator has moved the operator input device 128. In one of these positions the second valve element 126 extends the cylinders and lifts the feeder house. In the other of these two positions, the second valve element retracts the cylinders and lowers the feeder house. ECU 130 is preferably a digital microcontroller. Operator input device 128 is preferably a quadrant lever coupled to a potentiometer or a shaft encoder that in turn is coupled to the ECU.

Once the feeder house is in the desired position, the operator releases the operator input device, which returns to a center neutral position. ECU 130 responsively returns the valve elements 124,126 to their de-energized positions illustrated in Figure 3 for normal operation harvesting crop. In these valve positions, the cylinders can neither retract nor extend when either end of the header impacts the ground, thus counteracting torque "T" which tends to cause feeder house twisting.

The hydraulic cylinders can be mounted such that they lift the feeder house when they are retracted, in which case the hydraulic circuit connections to the hydraulic cylinders would be reversed to block flow out of the head ends of the cylinders during normal operation instead of blocking flow out of the rod ends. The first valve element 124 could permit flow into the rod end ports and prevent flow out of the cylinder rod end ports instead of preventing flow both ways. The separate valve elements could be combined in a single valve element or subdivided into multiple additional valve elements. The ECU could be partially or totally replaced with pneumatic or hydraulic components. The lifting and lowering of the feeder house may be automatically controlled by a program within the ECU in response to certain physical conditions instead of being manually controlled. The feeder house can be configured to permit the header to move up and down or rotate partially or totally about other axes of movement such as the horizontal and longitudinally extending axis about which torque "T" is generated. The feeder house need not be constrained to pivot about axis 116 but may have additional structures coupling it to the vehicle that give it a greater range of motion.

## Claims

1. An agricultural harvester (100) comprising:
a self-propelled vehicle (102);
a feeder house (104) coupled to the vehicle (102) to pivot about a laterally extending axis (116);
left and right feeder house lift cylinders (108, 110) coupled between the feeder house (104) and the vehicle (102) to lift and lower the feeder house (104) with respect to the vehicle (102); and
a hydraulic circuit (122) coupled to the lift cylinders (108, 110),
**characterized in that** the hydraulic circuit (122) is configured to block fluid flow out of the rod ends of each of the cylinders (108, 110) during normal harvesting operation and/or transport thereby reducing twisting of the feeder house (104).

2. The harvester (100) of claim 1, wherein the hydraulic circuit (122) includes at least one valve element (124) that alternatively (1) couples the rod end cylinder port of the cylinders (108, 110) to a hydraulic reservoir (134), and (2) blocks flow out of the first cylinder port.

3. The harvester (100) of claim 1, wherein the hydraulic circuit (122) is configured to couple the rod ends of the lift cylinders (108, 110) to a hydraulic reservoir (134) during extension and retraction of the lift cylinders (108, 110) and to block flow from the rod ends when the cylinders (108, 110) are not being retracted.

4. The harvester of claim 1, wherein the rod ends of the cylinders (108, 110) are coupled to the feeder house (104).

## Patentansprüche

1. Landwirtschaftliches Erntefahrzeug (100), das Folgendes umfasst:
ein Fahrzeug (102) mit Eigenantrieb;
ein Fördergehäuse (104), das mit dem Fahrzeug (102) verbunden ist, um um eine sich lateral erstreckende Achse (116) zu schwenken;
einen linken und einen rechten Fördergehäusehebezylinder (108, 110), die zwischen dem Fördergehäuse (104) und dem Fahrzeug (102) verbunden sind, um das Fördergehäuse (104) bezüglich des Fahrzeugs (102) anzuheben und abzusenken; und
einen Hydraulikkreis (122), der mit den Hebezylindern (108, 110) verbunden ist,
**dadurch gekennzeichnet, dass** der Hydraulikkreis (122) dazu konfiguriert ist, Fluidstrom aus den Stangenenden jedes der Zylinder (108, 110) in normalem Ernte- und/oder Transportbetrieb zu blockieren und dadurch ein Verdrehen des Fördergehäuses (104) zu reduzieren.

2. Erntefahrzeug (100) nach Anspruch 1, wobei der Hydraulikkreis (122) mindestens ein Ventilelement (124) enthält, das abwechselnd (1) die Stangenendenzylinderöffnung der Zylinder (108, 110) mit einem hydraulischen Speicher (134) verbindet und (2) Strömung aus der ersten Zylinderöffnung sperrt.

3. Erntefahrzeug (100) nach Anspruch 1, wobei der Hydraulikkreis (122) dazu konfiguriert ist, während des Ausziehens und Einziehens der Hebezylinder (108, 110) die Stangenenden der Hebezylinder (108, 110) mit einem hydraulischen Speicher (134) zu verbinden und Strömung von den Stangenenden zu sperren, wenn die Zylinder (108, 110) nicht eingezogen sind.

4. Erntefahrzeug nach Anspruch 1, wobei die Stangenenden der Zylinder (108, 110) nicht mit dem Fördergehäuse (104) verbunden sind.

## Revendications

1. Moissonneuse agricole (100), comprenant :
un véhicule autopropulsé (102) ;
un compartiment convoyeur (104) accouplé au véhicule (102) de manière à pivoter autour d'un axe s'étendant latéralement (116) ;
des vérins de levage gauche et droit du compartiment convoyeur (108, 110) couplés entre le compartiment convoyeur (104) et le véhicule (102) pour lever et abaisser le compartiment convoyeur (104) par rapport au véhicule (102) ; et
un circuit hydraulique (122) accouplé aux vérins de levage (108, 110),
**caractérisée en ce que** le circuit hydraulique (122) est configuré pour bloquer l'écoulement de fluide hors des extrémités des tiges de chacun des vérins (108, 110) pendant l'opération de moisson normale et/ou le transport, pour ainsi réduire la torsion du compartiment convoyeur (104).

2. Moissonneuse (100) selon la revendication 1, dans laquelle le circuit hydraulique (122) comporte au moins un élément de soupape (124) qui, de façon alternée, (1) accouple l'orifice d'extrémité de tige de vérin des vérins (108, 110) à un réservoir hydraulique (134) et (2) bloque l'écoulement hors du premier orifice de vérin.

3. Moissonneuse (100) selon la revendication 1, dans laquelle le circuit hydraulique (122) est configuré pour accoupler les extrémités de tige des vérins de levage (108, 110) à un réservoir hydraulique (134) au cours de la sortie et de la rentrée des vérins de levage (108, 110) et pour bloquer l'écoulement des extrémités de tige lorsque les vérins (108, 110) ne sont pas rentrés.

4. Moissonneuse selon la revendication 1, dans laquelle les extrémités de tige des vérins (108, 110) sont accouplées au compartiment convoyeur (104).
